# EUROPEAN PATENT SPECIFICATION

(11) **EP 2 215 393 B1**
(45) Date of publication and mention of the grant of the patent: **12.08.2015**
(21) Application number: 08856877.9
(22) Date of filing: 03.12.2008
(51) Int. Cl.: F16L 37/373, F16L 55/10, B63B 27/24, F16L 29/00

(54) **CONNECTOR WITH AN INTEGRATED QUICK/CONNECT DISCONNECT AND EMERGENCY RELEASE SYSTEM**
STECKVERBINDER MIT INTEGRIERTEM SCHNELLVERSCHLUSS UND -ABZUG SOWIE NOTFALLFREIGABESYSTEM
RACCORD AVEC CONNEXION/DÉCONNEXION RAPIDE INTÉGRÉE ET SYSTÈME DE LIBÉRATION D'URGENCE

(30) Priority: 03.12.2007 EP 07122137
(43) Date of publication of application: 11.08.2010
(73) Proprietor: Single Buoy Moorings Inc., 1723 Marly (CH)
(72) Inventor: BAUDUIN, Christian, F-06360 Eze Bord de Mer (FR); BENOIT, Jean-Pierre, 06800 Cagnes sur Mer (FR)
(74) Representative: Nederlandsch Octrooibureau
(86) International application number: PCT/EP2008/066728
(87) International publication number: WO 2009/071591

(56) References cited:
- DE-A1- 2 717 135
- FR-A- 1 420 441
- GB-A- 2 162 270
- US-A1- 2004 244 846

## Description

### Field of the invention

The invention relates to a connector for releasably attaching two hydrocarbon ducts, the connector comprising first and second connector members, each connector member having a housing with a fluid passage, a valve rotatably seated in the passage for closing off the fluid passage, drive members attached to a respective valve situated at an outer surface of the housing for rotation of the valves between an open state and a closed state, each drive member comprising a displacement device.

### Background of the invention

Such a connector is known from US patent application no. 2004/0244846. In this publication, an arrangement for connection and disconnection of two end sections of pipelines for transfer of liquefied natural gas is shown. The known arrangement comprises a butterfly valve with a circular disk mounted inside the pipe sections and with articulated arms, driven by a shaft that is rotated by means of a rotating drive member on the outer perimeter of the valve housing.

The pipe segments are interconnected via a two ring segments that can be moved apart in a radial direction in case of an emergency disconnection. In case of disconnection, the ring segments remain attached to one of the pipe sections.

The known construction has as a disadvantage that prior to separating the pipe sections, the valve disks must be rotated into their closed positions by the rotating drive member. This means that in case of a power failure, the disks must be manually closed which may lead to a dangerous operation, in particular in case of transfer of LNG. Also, reconnection of the pipe sections after a disconnecting operation, is relatively difficult.

A connector according to the preamble of claim 1 is known from FR 1 420 441 A.

It therefore is an object of the present invention to provide a connector for releasably connecting two fluid ducts, in particular two hydrocarbon transfer ducts, wherein each duct comprises a valve that can reliably be closed both upon emergency disconnection, even in case of a power failure and also prior to a regular disconnecting operation. It is a further object to provide a connector that can be re-attached in an easy manner after disconnection of the fluid ducts. It is again an object of the invention to provide a connector of relatively light weight.

### Summary of the Invention

The invention is a connector according to the subject-matter of claim 1.

Each drive member of the connector according to the invention comprises a displacement device that is movable in an axial direction of the housing and a first and second force element coupled to a respective displacement device, wherein in the coupled state of the connector members, the displacement device of the second drive member engages with the displacement device of the first drive member to place the first and second drive members in an axial opening position in which the valves are opened and the force elements are in a compressed state, and wherein upon axial retraction of the second displacement device away from the first connector member, the first and second displacement devices are movable by expansion of the force elements to an axial closure position in which the valves are closed.

Actuation for opening of the valves can occur after coupling of the duct sections and after mutually attaching the connector members, by exerting a hydraulic or pneumatic force on the drive members, which force is directed perpendicular to an interconnecting interface of the connector members. This hydraulic or pneumatic force will place the force elements in their compressed state such that the valves are opened.

The displacement devices can return to their normally closed state upon release of the hydraulic or pneumatic pressure that is exerted on the displacement members, thus allowing the drive members to move in relation to a connecting interface. This release of hydraulic or pneumatic pressure can occur during a regular disconnect operation, prior to separation of the connector members or can occur during an emergency release when the connector members are suddenly separated. In this manner, the valves are closed upon emergency disconnection without the need for external electrical, hydraulic or pneumatic power supply or manual intervention. Because the drive members that can be actuated to open the valves upon or after connection can close the valves in a passive manner, easy, safe and reliable reconnection of the connector after an emergency disconnect operation can be achieved, such that the emergency disconnect device of the present invention can function at the same time as a regular quick connect/disconnect device.

By providing the normally closed drive members on the outer periphery of the duct sections, it is also possible that the displacement devices may be actuated to be displaced against the expansion force that is exerted by the force elements by mutual contact when the connector members are brought together during the coupling operation. Hereby the valves can be opened even in absence of hydraulic or pneumatic power.

By providing an integrated quick connect/disconnect (QC/DC) system and emergency release coupling (ERC) according to the invention, a single interconnecting interface is formed and the weight of the system can be reduced compared to known systems which provide a QC/DC and ERC system situated at axially spaced positions along the duct. For instance, it is known to provide a QC/DC system on the duct section close to the manifold of a hydrocarbon carrier, such as an LNG carrier, whereas the ERC is provided at the interconnecting end of a flexible hose, such as for instance an LNG hose.

Especially when the fluids transported through the interconnected ducts comprise cryogenic fluids, it is of advantage that upon loading/offloading of these cryogenic fluid, the distance between the QC/DC system and the ERC system is minimised such that upon emergency disconnection relatively little cryogenic fluid can enter into the environment.

By alignment of the displacement devices on the duct sections, the protruding parts can be placed in a position in which chances of damage upon inadvertent contact with other parts of the offshore structure are minimised and optimal economy of weight and space is obtained.

In an embodiment, the first drive member comprises a cylinder, a piston being connected to the first displacement device, which displacement device extends outside the cylinder, a spring member being situated at a piston side that is situated away from the second connector member providing an axial force on the piston directed in the direction of the second connector member. In this way, the first displacement device is driven in a passive manner upon expansion of the force element when this displacement device is no longer restrained by the second displacement device. Hereby the first valve is closed.

The second displacement device is actuated by hydraulic or pneumatic pressure. The second drive member comprises a cylinder, a piston being connected to the second displacement device, which displacement device extends outside the cylinder. A pressure fluid line is connected to the cylinder at a piston side that is situated away from the first connector member and a spring member is situated at or near the opposite piston side providing an axial force on the piston directed away from the first connector member. After coupling of the ducts, hydraulic or pneumatic fluid is fed into the second cylinder such that the displacement device of the second drive member is moved in the axial direction of the ducts. Hereby the second valve is opened and the second force member is compressed. When the second displacement device engages with the first displacement device, the latter is axially displaced such that the first valve is opened and the first force element is compressed. Removal of the hydraulic pressure from cylinder of the second drive member will allow the first and second force elements to expand and to displace the first and second pistons and displacement devices axially away from the interconnecting interface, such that the valve are opened.

A fixing device, such as a clamping ring, may be comprised at the connecting interface between the connector members. The fixing device may be operated hydraulically or pneumatically by a control unit such that it is placed in a release position in which the connector members are decoupled while at the same time the pressure in the cylinder of the second drive member is released. Hereby it is made sure that upon disconnection of the connector members, the valves are closed at all times.

In one embodiment, the fixing device comprises a force element for release when a predetermined force is exerted on the force element, the control unit upon release of the fixing device decreasing the pressure in the pressure fluid line.

The fixing device may be attached to one of the housings via a break-away connector which is released when a predetermined force on the break-away connector is exceeded, a sleeve extending over an axial length around a housing, which length corresponds to a displacement length of the first displacement device when moving from the axial opening position to the axial closing position. In this way it is ensured that at the moment the break-away connector axially clears the housing of the connector member to which it is attached, the valve inside the housing will be closed and no spillage of hydrocarbon along the break-away connector can take place.

It should be noted that WO02092423 relates to a connector body for offshore transfer of fluid between risers and the connector assembly. For each riser, the connector body has a QC/DC coupling for connection to the corresponding QC/DC coupling of the connector assembly. Each QC/DC coupling is provided with an isolation valve. These isolation valves, which are standard equipment, automatically close before the QC/DC couplings are disconnected, and open after the QC/DC couplings are connected. The connector according to the present invention provides a multi purpose connection system by integrating Quick Connect Disconnect Coupling (QC/DC) suitable for normal operations , an Emergency Release Coupling (ERC) for controlled emergency disconnections and, alternatively a BAC for uncontrolled emergency scenarios. The QC/DC activation mechanism may be power-operated both ways, open and closed. The activation of the ERC mechanism is done via a "triggering device" which releases stored energy and can break ice formed thereon. By having a passive release system disconnection is possible even in case of a power failure. In this way, upon emergency disconnection, hazardous fluids will not be lost. This is especially important in case of transfer of liquefied natural gas (LNG) for instance between a loading and unloading terminal and a shuttle tanker.

### Brief description of the drawings

Some embodiments of a connector according to the present invention will be explained in detail with reference to the accompanying drawings. In the drawings:
Fig. 1 shows a perspective view of an LNG tanker with its bow in fluid connection with the stem of an LNG-FPSO via a flexible hose and a connector according to the invention,
Fig. 2 shows a perspective view of the connector according to the invention,
Fig. 3 shows a front view of the connector of fig. 2,
Fig. 4 shows a cross-sectional view along the line A-A in fig. 3,
Fig. 5 shows a schematic view of the drive members of the connector of fig. 4 which is operated by means of hydraulic pressure,
Fig. 6 shows a schematic view of the drive members which do not require a pressure source for rotation of the valves, which is not part of the invention,
Fig. 7 shows a perspective view of the clamping mechanism in the decoupled state of the connector members, and
Fig. 8 shows a perspective view of the clamping mechanism in the coupled state of the connector members.

### Detailed description of illustrated embodiments

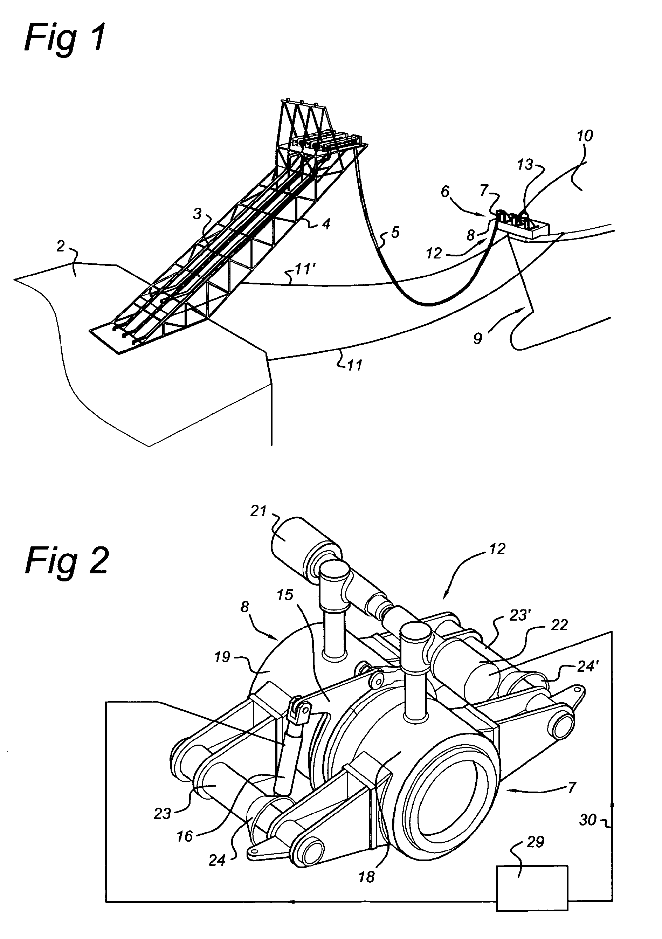

Fig. 1 shows a tandem loading/offloading system located at the stem of a Floating, Production, Storage and Offloading (FPSO) vessel 1, having on board liquefaction facilities for natural gas. Gas that is supplied to the vessel 1, for instance via sub sea risers connected to a hydrocarbon wellhead, is treated on the vessel I for removal of undesired components such as sulphur and water, and is liquefied at a temperature of -163° C. From the LNG FPSO 1, the LNG is transferred by piping 3 to a transfer boom 4 at the stern 2. The piping 3 connects to an aerial catenary flexible cryogenic hose 5 that is at its end part 6 provided with a first connector member 8. The first connector member 8 is releasably connected to a second connector member 7 that is part of a manifold at the bow 9 of a LNG carrier 10. Positioning of the carrier 10 is achieved via Dynamic Positioning (DP). Mooring hawsers 11, 11' connect the LNG carrier 10 in tandem configuration to the FPSO 1, as a back-up safety mooring in case the DP system fails to prevent drift astern of the LNG carrier 10. To the hammerhead structure at the bow 9 of the LNG carrier 10, three hoses 5 can be coupled via their respective connector members. The connector members 8 that are integrated in the hammerhead structure at the bow 9 can be positioned via a hinge connection. A winch 13 is situated at the bow 9 for pulling in the hose 5 to its connecting position.

Fig. 2 shows the connector 12 of the invention, which integrates a quick connect-disconnect coupling (QC/DC), an emergency release coupling (ERC) and a break-away coupling (BAC) at the same interface. The QC/DC comprises a clamping device 15 including a spring loaded collar an a release mechanism 16 with a hydraulic cylinder.

The ERC is formed by the clamping device 15 and release mechanism 16, which performs both the regular coupling function and the emergency release operation.

Each connector member 7,8 comprises a housing 18,19 with internal fluid passages in which a rotatable ball valve is seated. The ball valves are actuated via drive members 21, 22 that are situated on an outer surface of the housings 18,19. The drive member 22 is hydraulically actuated via a control unit 29 which via a line 30 supplies hydraulic pressure to the drive member 22. The control unit 29 is also connected to the release mechanism 16 of the clamping device 15, which is provided along its circumference with spring elements that, after the hydraulic cylinder is activated by an impulse, expand to open the clamping device 15 rapidly once the hydraulic release mechanism is beyond its equilibrium point. The clamping device 15 opens mechanically without being slowed down by the hydraulic mechanism 16, breaking through any ice layer that may have formed over the clamping device 15.

On the outer surface of the housings 18, 19, guide pins 24, 24' and bushes 23, 23' are placed for aligning the coupling interfaces of the connector members 7,8 during the connecting operation.

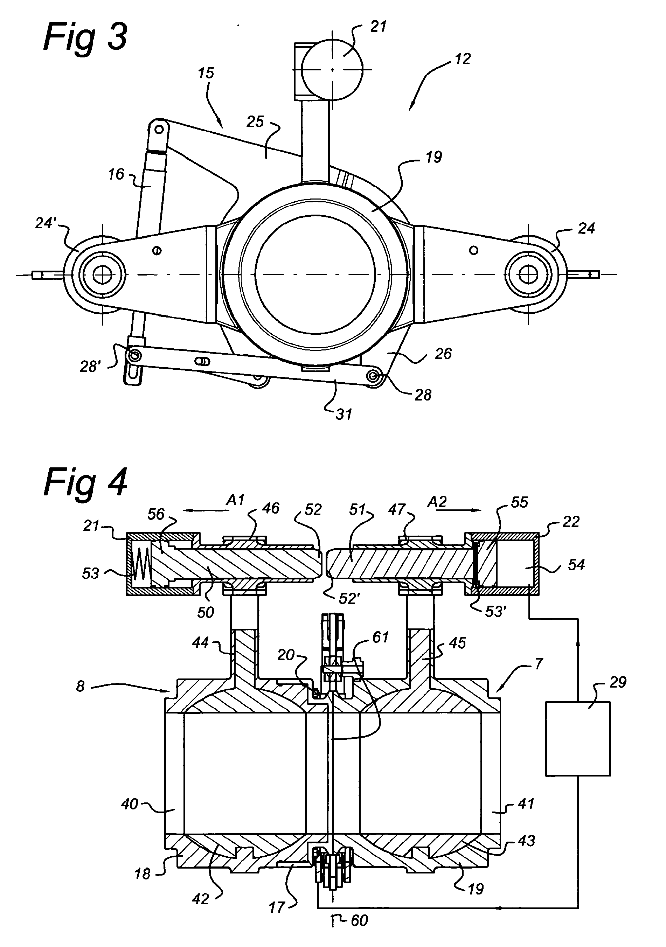

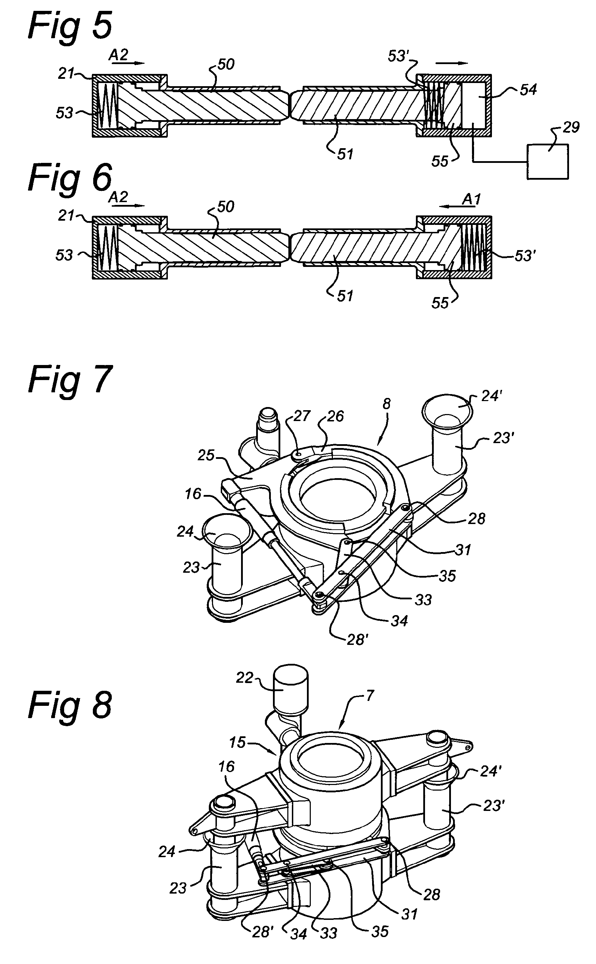

Fig. 3 shows a front view of the connector 12 wherein the clamping device 15 can be seen to comprise a first part 25 which is hingingly attached to a second part 26 in a hinge point 27 (see figure 7). A bar 31 attaches the lower side of spring 16 to the lower side of second part 26 in respective hinge points 28, 28'.

From fig. 4 it can be seen that the connector members 7,8 each comprise a fluid passage 40, 41 that can be closed off by ball valves 42, 43. Each ball valve 42, 43 comprises a shaft 44, 45 extending through the housing 18, 19. A rotational drive part 46, 47 at the end of each shaft 44, 45 is connected to a linear drive member 21, 22 that comprises a displacement device in the form of a piston 50, 51 with each at its end an abutment surface 52, 52'. The pistons 50, 51 can be displaced in the axial directions A1, A2 under the expansion force of springs 53,53'. Springs 53, 53'are accommodated inside the cylinders of the drive members 21, 22 and exert a force against the piston heads 55, 56 in the direction of arrow A2.

After connecting the connector members 7,8 via the clamping device 15, the control unit 29 can activate the supply of a hydraulic fluid to the chamber 54 of the second drive member 22 such that the piston 51 is moved in the direction A1, against the expansion force of the spring 53'. Hereby the shaft 45 is rotated and the ball valve 43 is opened. The piston 50 of the first drive member 21 is pushed in the direction of the arrow A1 and the spring 53 is compressed. Hereby the shaft 44 is rotated and the ball valve 42 is opened.

When the pressure in the chamber 54 is released, the springs 53, 53'will expand and the pistons 51, 50 will move in the direction of the arrow A2, such that ball valves 42,43 are closed.

Upon separating the connector members 7, 8 in case of an emergency, the control unit 29 activates the hydraulic release mechanism 16 of the clamping device 15, such that the parts 25, 26 hinge open. At the same time, the control unit 29 releases the pressure in chamber 54 such that the pistons 50, 51 move under the influence of the spring force of springs 53, 53' in the chambers 53, 54 in the direction of the arrow A2 to an extended position in which they are situated to the right-hand side of the plane 60 of the connecting interface 61. Hereby, the rotational drive parts 46, 47 are operated such that the valves 42, 43 are closed.

In fig. 4, the break-away connector (BAC) comprises a sleeve 17 that fits around the housing 18 of the connector member 8. The sleeve 17 is connected via calibrated shear bolts 20, that break under a certain tension, attached to the housing 18.The length of the sleeve 17 in the axial direction A1, A2 is the same as the length of the stroke of the pistons 50, 51, such that the valves 42, 43 are fully closed at the moment that the housing 18 is separated from the sleeve 17.

Fig 5 schematically shows the embodiment of hydraulically actuated drive members 21, 22.

Fig. 6 schematically shows an embodiment not according to the invention, in which the spring 53 is situated at the other side of the

piston head 55 compared to fig. 5, such that the pistons 50, 51 are each extended to their maximal extent when the drive members 21, 22 are separated, and the ball valves 42, 43 are closed. Upon abutting of the pistons 50, 51, and bringing the drive members 21, 22 together, the pistons 50, 51 retract into the cylinders, such that the springs 53, 53'are compressed and the ball valves 42, 43 are closed. No hydraulic power is required in this case for operation of the ball valves 42, 43, the energy for actuation of closing of the valves being obtained from the force with which the connector members 7,8 are brought together.

Fig. 7 shows in a perspective view the clamping member 15, with the hydraulic release mechanism 16 in the expanded state, while the connector member 7 has not yet been attached. Fig. 8 shows the clamping member 15 with the hydraulic release mechanism 16 in the retracted state, the connector member 7 being clampingly engaged by the mechanism 15.

## Claims

1. Connector (12) for releasably attaching two hydrocarbon ducts, the connector comprising first and second connector members (7,8), each connector member (7,8) having a housing (18,19) with a fluid passage (40,41), a valve (42, 43) rotatably seated in the passage for closing off the fluid passage, drive members (21,22) attached to a respective valve (42,43) situated at an outer surface of the housing for rotation of the valves between an open state and a closed state, each drive member (21,22) comprising a displacement device (50,51) movable in an axial direction (A) of the housing (18,19) and a first and second force element (53,53',54) coupled to a respective displacement device (50,51), wherein in the coupled state of the connector members (7,8), the displacement device (51) of the second drive member (22) engages with the displacement device (50) of the first drive member (21) to place the first and second drive members (21,22) in an axial opening position in which the valves (42,43) are opened and the force elements (53,53') are in a compressed state, and wherein upon axial retraction of the second displacement device (51) away from the first connector member (8), the first and second displacement devices (50,51) are movable by expansion of the force elements (53,53') to an axial closure position in which the valves are closed, **characterized in that** the second drive member (22) comprises a cylinder, a piston (55) being connected to the second displacement device (51), which displacement device (51) extends outside the cylinder, a pressure fluid line (30) being connected to the cylinder at a piston side that is situated away from the first connector member (8) and a spring member (53') being situated at or near the opposite piston side providing an axial force on the piston (55) directed away from the first connector member (8).

2. Connector (12) according to claim 1, wherein the first drive member (21) comprises a cylinder, a piston (56) being connected to the first displacement device (50), which displacement device (50) extends outside the cylinder, a spring member (53) being situated at a piston side that is situated away from the second connector member (7) providing an axial force on the piston directed in the direction of the second connector member (7).

3. Connector (12) according to any of the preceding claims comprising a fixing device for interconnecting the connector members (7,8) at a connecting interface situated between the connector members (7,8).

4. Connector (12) according to claim 3, a control unit being connected to the fixing device and to a fluid supply means that is connected to the pressure fluid line, the control means unit being adapted to place the fixing device in a release position in which the connector members (7,8) are decoupled while at the same time the pressure of the pressure fluid line is released.

5. Connector (12) according to claim 4, wherein the fixing device is provided with a force element for release of the fixing device when a predetermined force is exerted on the force element, the control unit upon release of the fixing device decreasing the pressure in the pressure fluid line.

6. Connector (12) according to any of claims 3, 4 or 5 wherein the fixing device is attached to one of the housings via a break-away connector which is released when a predetermined force is exerted on the break-away connector.

7. Connector (12) according to claim 6, wherein the break-away connector comprises a sleeve extending over an axial length around a housing, which length corresponds to a displacement length of the first displacement device (50), and/or the second displacement device (51) when moving from the axial opening position to the axial closing position.

## Patentansprüche

1. Verbindungsstück (12) zur lösbaren Befestigung zweier Leitungen für Kohlenwasserstoffverbindungen, wobei das Verbindungsstück erste und zweite Verbindungselemente (7, 8) aufweist, jedes Verbindungselement (7, 8) ein Gehäuse (18, 19) mit einem Fluiddurchgang (40, 41), einem Ventil (42, 43), das drehbar in dem Durchgang zum Absperren des Fluiddurchgangs eingepasst ist, Antriebselemente (21, 22), die an einem jeweiligen Ventil (42, 43) befestigt sind und sich an einer äußeren Fläche des Gehäuses zur Drehung der Ventile zwischen einem geöffneten Zustand und einem geschlossenen Zustand befinden, jedes Antriebselement (21, 22) eine Verdrängungsvorrichtung (50, 51), die in einer axialen Richtung (A) des Gehäuses (18, 19) bewegbar ist, und ein erstes und ein zweites Kraftelement (53, 53', 54) umfasst, die mit der jeweiligen Verdrängungsvorrichtung (50, 51) gekoppelt sind, wobei im gekoppelten Zustand der Verbindungselemente (7, 8) die Verdrängungsvorrichtung (51) des zweiten Antriebselements (22) mit der Verdrängungsvorrichtung (50) des ersten Antriebselements (21) in Eingriff kommt, um das erste und das zweite Antriebselement (21, 22) in einer axialen Öffnungsstellung anzuordnen, in der die Ventile (42, 43) geöffnet sind und die Kraftelemente (53, 53') sich in einem zusammengedrückten Zustand befinden, und wobei beim axialen Zurückziehen der zweiten Verdrängungsvorrichtung (51) von dem ersten Verbindungselement (8) weg, die ersten und zweiten Verdrängungsvorrichtungen (50, 51) durch Ausdehnung der Kraftelemente (53, 53') in eine axiale Schließstellung bewegbar sind, in der die Ventile geschlossen sind, **dadurch gekennzeichnet, dass** das zweite Antriebselement (22) einen Zylinder aufweist, einen Kolben (55), der mit der zweiten Verdrängungsvorrichtung (51) verbunden ist, wobei sich die Verdrängungsvorrichtung (51) außerhalb des Zylinders erstreckt, eine Druckfluidleitung 30 mit dem Zylinder an einer Kolbenseite verbunden ist, die von dem ersten Verbindungselement (8) weg liegt, und einem Federelement (53'), das an der entgegen gesetzten Kolbenseite oder in dessen Nähe liegt, eine axiale Kraft auf den Kolben (55) bewirkt, die von dem ersten Verbindungselement (8) weg gerichtet ist.

2. Verbindungsstück (12) nach Anspruch 1, wobei das erste Antriebselement (21) einen Zylinder aufweist, einen Kolben (56), der mit der ersten Verdrängungsvorrichtung (50) verbunden ist, wobei die Verdrängungsvorrichtung (50) sich außerhalb des Zylinders erstreckt, ein Federelement (53), das an einer Kolbenseite liegt, die sich von dem zweiten Verbindungselement (7) weg befindet, eine axiale Kraft auf den Kolben bewirkt, die in Richtung des zweiten Verbindungselements (7) gerichtet ist.

3. Verbindungsstück (12) nach einem der vorhergehenden Ansprüche, umfassend eine Befestigungsvorrichtung zum Zusammenschalten der Verbindungselemente (7, 8) an einer Verbindungsschnittstelle, die zwischen den Verbindungselementen (7, 8) liegt.

4. Verbindungselement (12) nach Anspruch 3, wobei eine Steuereinheit mit der Befestigungsvorrichtung und mit einer Fluidzuführeinrichtung verbunden ist, die an die Druckfluidleitung angeschlossen ist, wobei die Steuereinrichtungseinheit gestaltet ist, um die Befestigungsvorrichtung in einer Freigabestellung anzuordnen, in welcher die Verbindungselemente (7, 8) getrennt sind, während gleichzeitig der Druck der Druckfluidleitung entlastet wird.

5. Verbindungselement (12) nach Anspruch 4, wobei die Befestigungsvorrichtung versehen ist mit einem Kraftelement zur Lösung der Befestigungsvorrichtung, wenn eine vorgegebene Kraft auf das Kraftelement ausgeübt wird, die Steuereinheit bei Lösung der Befestigungsvorrichtung den Druck in der Druckfluidleitung senkt.

6. Verbindungselement (12) nach einem der Ansprüche 3, 4 oder 5, wobei die Befestigungsvorrichtung an einem der Gehäuse über einen Ablöseverbinder befestigt ist, der freigegeben wird, wenn eine vorgegebene Kraft auf den Ablöseverbinder ausgeübt wird.

7. Verbindungselement (12) nach Anspruch 6, wobei der Ablöseverbinder eine Buchse aufweist, die sich über eine axiale Länge um ein Gehäuse herum erstreckt, dessen Länge einer Verdrängungslänge der ersten Verdrängungsvorrichtung (50) und/oder der zweiten Verdrängungsvorrichtung (51) bei Bewegung aus der axialen Öffnungsstellung in die axiale Schließstellung entspricht.

## Revendications

1. Raccord (12) pour attacher, de manière détachable, deux conduits d'hydrocarbures, le raccord comprenant des premier et deuxième organes de raccord (7, 8), chaque organe de raccord (7, 8) comportant un logement (18, 19) avec un passage de fluide (40, 41), une vanne (42, 43) assise, de manière à pouvoir tourner, dans le passage pour fermer le passage de fluide, des organes d'entraînement (21, 22) attachés à une vanne respective (42, 43) située à une surface extérieure du logement pour une rotation des vannes entre un état ouvert et un état fermé, chaque organe d'entraînement (21, 22) comprenant un dispositif de déplacement (50, 51) pouvant être déplacé dans un sens axial (A) du logement (18, 19), et des premier et deuxième éléments de force (53, 53', 54) couplés à un dispositif de déplacement respectif (50, 51), dans lequel, dans l'état couplé des organes de raccord (7, 8), le dispositif de déplacement (51) du deuxième organe d'entraînement (22) se met en prise avec le dispositif de déplacement (50) du premier organe d'entraînement (21) pour placer les premier et deuxième organes d'entraînement (21, 22) à une position d'ouverture axiale à laquelle les vannes (42, 43) sont ouvertes et les éléments de force (53, 53') sont dans un état compressé, et dans lequel, à une rétraction axiale du deuxième dispositif de déplacement (51) à l'écart du premier organe de raccord (8), les premier et deuxième dispositifs de déplacement (50, 51) peuvent être déplacés par une expansion des éléments de force (53, 53') à une position de fermeture axiale à laquelle les vannes sont fermées, **caractérisé en ce que** le deuxième organe d'entraînement (22) comprend un cylindre, un piston (55) relié au deuxième dispositif de déplacement (51), le dispositif de déplacement (51) s'étendant à l'extérieur du cylindre, une conduite de fluide de pression (30) étant reliée au cylindre à un côté de piston qui est situé à l'écart du premier organe de raccord (8) et un organe de ressort (53') étant situé à proximité ou au niveau du côté de piston opposé fournissant une force axiale sur le piston (55) dirigée à l'écart du premier organe de raccord (8).

2. Raccord (12) selon la revendication 1, dans lequel le premier organe d'entraînement (21) comprend un cylindre, un piston (56) étant relié au premier dispositif de déplacement (50), le dispositif de déplacement (50) s'étendant à l'extérieur du cylindre, un organe de ressort (53) étant situé à un côté du piston situé à l'écart du deuxième organe de raccord (7) fournissant une force axiale sur le piston dirigé dans le sens du deuxième organe de raccord (7).

3. Raccord (12) selon l'une quelconque des revendications précédentes, comprenant un dispositif de fixation pour interconnecter les organes de raccord (7, 8) à une interface de liaison située entre les organes de raccord (7, 8).

4. Raccord (12) selon la revendication 3, une unité de commande étant reliée au dispositif de fixation et à un moyen d'alimentation de fluide qui est relié à la conduite de fluide de pression, l'unité de commande étant apte à placer le dispositif de fixation à une position de libération à laquelle les organes de raccord (7, 8) sont découplés pendant que la pression de la conduite de fluide de pression est relâchée en même temps.

5. Raccord (12) selon la revendication 4, dans lequel le dispositif de fixation est pourvu d'un élément de force pour une libération du dispositif de fixation lorsqu'une force prédéterminée est exercée sur l'élément de force, l'unité de commande réduisant la pression dans la conduite de fluide de pression à la libération du dispositif de fixation.

6. Raccord (12) selon l'une quelconque des revendications 3, 4 et 5, dans lequel le dispositif de fixation est attaché à l'un des logements par l'intermédiaire d'un raccord de désaccouplement qui est libéré lorsqu'une force prédéterminée est exercée sur le raccord de désaccouplement.

7. Raccord (12) selon la revendication 6, dans lequel le raccord de désaccouplement comprend un manchon s'étendant sur une longueur axiale autour d'un logement, la longueur correspondant à une longueur de déplacement du premier dispositif de déplacement (50) et/ou du deuxième dispositif de déplacement (51) en se déplaçant de la position d'ouverture axiale à la position de fermeture axiale.
